# EUROPÄISCHE PATENTANMELDUNG

(11) **EP 4 726 166 A1**
(43) Veröffentlichungstag der Anmeldung: **15.04.2026**
(21) Anmeldenummer: 24205962.4
(22) Anmeldetag: 10.10.2024
(51) Int. Cl.: E06B 9/42, E06B 9/50, E06B 9/60, E06B 9/90, B60J 1/20

(54) **ROLLO**

(71) Anmelder: Auto-Motion Shade Inc., Toronto, Ontario M1V 2W3 (CA)
(72) Erfinder: Grützner, Hans, 3122 Kehrsatz (CH)
(74) Vertreter: Keller Schneider Patent- und Markenanwälte AG

(57) **Zusammenfassung**

Das Rollo (1) zur Abdeckung einer Öffnung ist insbesondere zum Einbau in ein Fahrzeug geeignet. Eine flexible Abdeckung, beispielsweise zum Lichtschutz, ist auf einer drehbaren Walze (14) angeordnet. Eine Bremseinrichtung mit einer Schraubenfeder (17) ermöglicht eine Bewegung der Abdeckung in Schliessrichtung und verhindert die Bewegung in Öffnungsrichtung. Die Bremseinrichtung enthält einen Zylinder (15), um den die Schraubenfeder (17) gewickelt ist. Ein festes Ende (18) der Schraubenfeder (17) ist mit einem an einer Endwand (3) angeordneten Haltebolzen (20) verbunden und ein bewegliches Ende der Schraubenfeder (17) wirkt mit einem Betätigungselement (7) zum Lösen der Bremseinrichtung zusammen. Der Zylinder (15) und die Walze (14) sind drehbar auf einer gemeinsamen, feststehenden Achse (13) angeordnet und der Zylinder (15) ist durch ein Mitnahmeelement (16) mit der Walze (14) drehverbunden. Dadurch ist der Aufbau des Rollos einfach und die Bremseinrichtung kann vor dem Zusammenbau vormontiert und an Lager gehalten werden.

## Beschreibung

Die Erfindung betrifft ein Rollo nach dem Oberbegriff des Patentanspruchs 1.

Es sind Rollos zur mindestens teilweisen Abdeckung einer Öffnung, beispielsweise eines Fensters, bekannt, bei denen eine flexible Abdeckung um eine oben an der Öffnung angeordnete drehbare Walze auf- und abgewickelt wird. In der Walze ist eine Federeinrichtung angeordnet, welche die Abdeckung hochzieht. Am unteren Ende des Abdeckung ist meistens eine Schiene angebracht. Um die Position der Abdeckung in einer gewünschten Lage zu fixieren, wird häufig ein Sperrzahnmechanismus eingesetzt.

Ein Nachteil der bekannten Sperrzahnmechanismen besteht darin, dass es nicht ganz einfach ist, die gewünschte vertikale Position der Schiene einzustellen. Bei manchen bekannten Rollos der genannten Art muss zum Öffnen der Abdeckung diese zuerst kurz nach unten gezogen werden, um den Sperrzahnmechanismus zu entriegeln. Dies gelingt nicht immer auf Anhieb, weil manchmal der Sperrzahnmechanismus in einer unerwünschten Position wieder einrastet. Beim Einsatz von derartigen Rollos in Fahrzeugen kann sich das Rollo beim Befahren unebener Strassen ungewollt öffnen, was zu gefährlichen Situationen führen kann, insbesondere wenn das Rollo beim Fahrersitz montiert ist.

Bei anderen bekannten Rollos wurden auch schon Reibungsbremsen eingesetzt, bei denen eine Schraubenfeder entweder aussen um eine mit der Walze verbundene Achse gewunden ist oder sich von innen gegen einen mit der Walze verbundenen Hohlzylinder spannt. Beispiele sind in den Dokumenten EP58883A1 und DE69824626T2 beschrieben.

Alle im Dokument DE69824626T2 beschriebenen Rollos werden durch ein Zugseil bzw. eine Zugschleife betätigt, das heisst gesenkt oder gehoben, wobei gleichzeitig die Bremse gelöst wird. Beim Rollo gemäss EP58883A1 sind zwar manuell bedienbare Ausführungsarten beschrieben, jedoch sind alle relativ kompliziert aufgebaut.

Ausgehend von diesem Stand der Technik liegt der Erfindung die Aufgabe zugrunde, ein Rollo vorzuschlagen, das einfach aufgebaut und einfach zu montieren und zu bedienen ist.

Diese Aufgabe wird erfindungsgemäss durch die im kennzeichnenden Teil des Patentanspruchs 1 angegebenen Merkmale gelöst.

Diese Gestaltung hat insbesondere den Vorteil, dass die Bestandteile der Bremseinrichtung an einer der Endwände befestigt sind und dadurch die Bremseinrichtung vor dem Zusammenbau mit dem Rollo vormontiert und an Lager gehalten werden kann. Vor dem Zusammenbau mit dem Rollo sind nur das Profil, die Walze, die Abdeckung und die Achse auf die gewünschte Breite des Rollos anzupassen.

Ausführungsbeispiele der Erfindung werden nachstehend unter Bezugnahme auf die angefügten Zeichnungen erläutert. Es zeigen
- Figur 1: eine Gesamtansicht einer Ausführungsart des Rollos;
- Figur 2: einen Längsschnitt durch die Bremseinrichtung;
- Figur 3: einen Querschnitt einer ersten Ausführungsart der Bremseinrichtung und
- Figur 4: einen Querschnitt einer zweiten Ausführungsart der Bremseinrichtung.

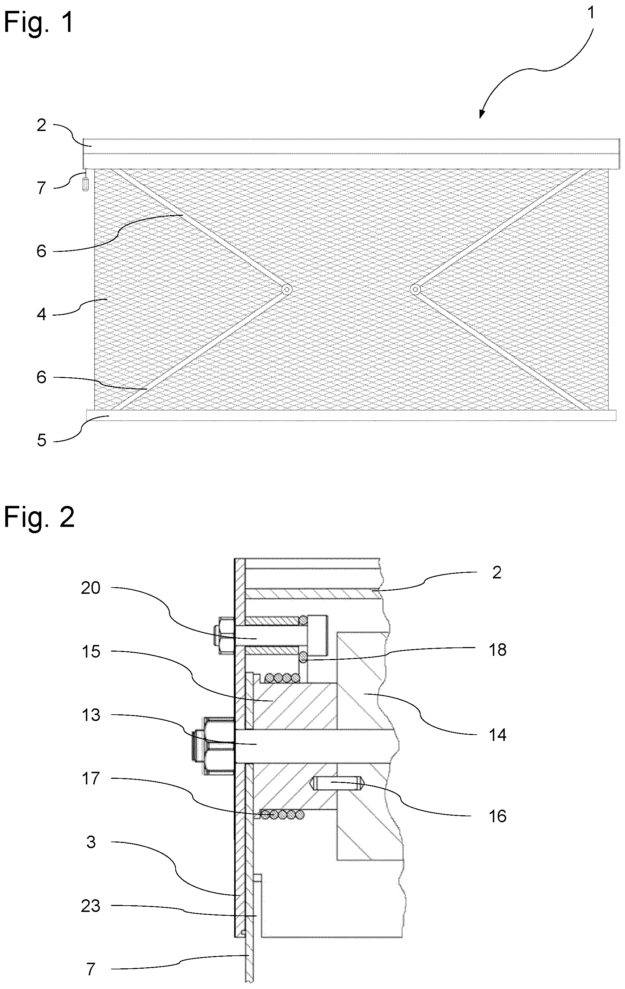

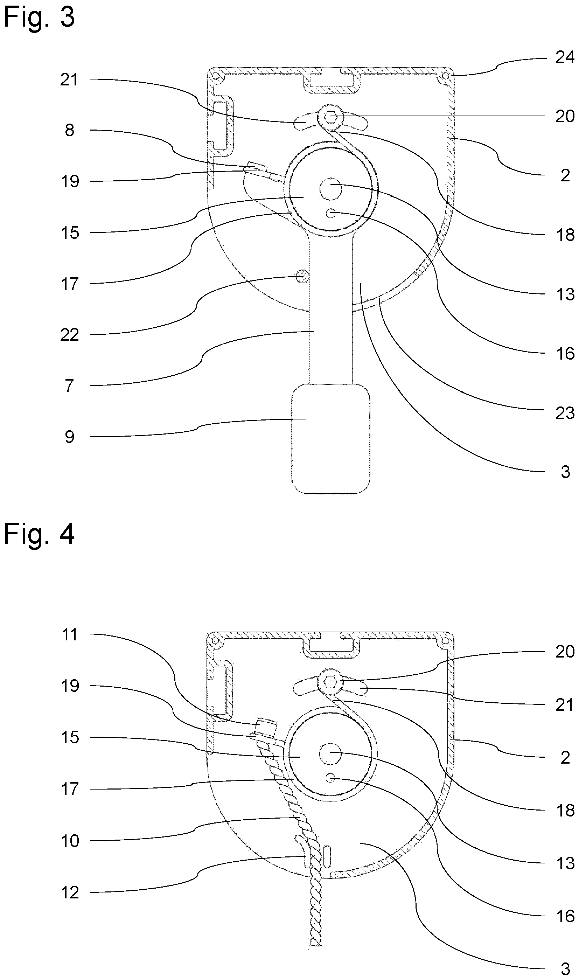

Figur 1 zeigt eine schematische Übersicht eines erfindungsgemässen Rollos 1. In einem Profil 2 sind Komponenten untergebracht, auf die später unter Bezugnahme auf die Figuren 2 bis 4 eingetreten wird. Eine flexible Abdeckung 4, beispielsweise aus einem Gewebe, kann aus dem Gehäuse 2 herausgezogen werden, um beispielsweise ein Fenster eines Fahrzeuges vor Licht und/oder Blicken zu schützen. Am unteren Ende der Abdeckung 4 ist eine Schiene 5 angeordnet. Letztere ist mit vier Gelenkhebeln 6 verbunden, welche zusammen mit der Schiene 5 für eine Straffung und Stabilisierung der Abdeckung 4 sorgen. Auf einen mit der Bezugszahl 7 versehenen Betätigungshebel wird weiter unten im Zusammenhang mit Figur 3 eingegangen.

In Figur 2 ist in einem gegenüber Figur 1 vergrösserten Massstab ein Längsschnitt durch den in Figur 1 linken oberen Teil des Rollos 1 dargestellt. Ein langgezogenes Profil 2 bildet ein Gehäuse des Rollos 1 und beherbergt die nachstehend beschriebenen Komponenten. Das Profil 2 ist an beiden Enden durch eine Endwand geschlossen, von denen in den Figuren nur die linke Endwand 3 dargestellt ist. Letztere trägt eine nicht drehbare Achse 13, auf der eine Trommel 14 rotierbar angeordnet ist, auf der die Abdeckung 4 aufgewickelt ist. Die Trommel 4 ist auf einem Teil ihrer Länge hohl und beherbergt eine nicht dargestellte Federeinrichtung, die derart vorgespannt ist, dass die Abdeckung nach oben zum Profil 2 gezogen wird. Ein Zylinder 15 ist ebenfalls drehbar auf der Achse 13 angeordnet und durch einen Mitnahmestift 16 mit der Trommel 14 verbunden. Eine Schraubenfeder 17 umschlingt den Zylinder 15 mit mehreren Windungen und hat zwei radial von ihr abragende Enden, von denen in Figur 2 nur das feste Ende 18 sichtbar ist, welches mittels eines Haltebolzens 20 an der Endwand 3 befestigt ist. Ausserdem ist in dieser Figur noch ein Betätigungshebel 7 sichtbar, der zur Ausführungsart gemäss Figur 3 gehört. Die vorangehend beschriebenen Teile 15, 16, 17 und 20 bilden zusammen eine Bremseinrichtung, die auch spiegelbildlich ausgeführt und an der gegenüberliegenden Seite des Profils 2 angeordnet werden kann. In diesem Fall muss die Schraubenfeder 17 andersherum im Sinne von rechts- bzw. linksgängig gewickelt sein.

Die Figuren 3 und 4 zeigen in einem Querschnitt durch das Profil 2 eine erste beziehungsweise zweite Ausführungsart der Bremseinrichtung. Die Endwand 3 wird am Ende des Profils 2 durch nicht dargestellte Schrauben gehalten, die in im Profil 2 vorgesehene Kanäle 24 greifen. Letztere können gegen das Innere des Profils hin offen sein, was die Herstellung des Profils 2 vereinfacht. Wie erwähnt ist der Zylinder 15 auf der Achse 13 drehbar angeordnet und mit dem Mitnahmestift 16 mit der Walze drehverbunden. Die Schraubenfeder 17, welche den Zylinder 15 umschlingt, hat ein bewegliches Ende 19, das in den Figuren 3 und 4 nicht sichtbar ist, weil es vor der Schnittebene liegt, und das bereits erwähnte feste Ende 18, welches am Haltebolzen 20 befestigt ist, der seinerseits an der Endwand 3 fixiert ist. Die Schraubenfeder 17 ist in Analogie zu einem Gewinde rechtsgängig gewickelt, so dass der Zylinder 15 bei einer Drehung im Gegenuhrzeigersinn beim Senken des Abdeckung durch Reibung die Schraubenfeder 17 leicht aufweitet, wodurch der Drehung des Zylinders15 nur ein leichter Widerstand entgegenwirkt. Deshalb kann die Abdeckung relativ leicht manuell nach unten gezogen werden, um beispielsweise eine Fensteröffnung abzuschatten. Wird hingegen die Abdeckung durch die in der Trommel vorhandene Federeinrichtung nach oben gezogen, also der Zylinder 15 im Uhrzeigersinn gedreht, verkleinert sich der Durchmesser der Schraubenfeder, so dass diese den Zylinder 15 enger umschlingt und dessen weitere Drehung im Uhrzeigersinn verhindert. Somit wirkt die Bremseinrichtung wie eine Rücklaufsperre. Wie aus den Figuren 3 und 4 ersichtlich, ist der mögliche Bewegungsweg des freien Endes 19 der Schraubenfeder konstruktionsbedingt auf ungefähr 45 Winkelgrad beschränkt. Da die Herstellung der Schraubenfeder 17 mechanischen wie auch werkstofflichen Toleranzen bei der Elastizität unterliegt, kann der genannte mögliche Bewegungsweg knapp werden, so dass entweder die Wirkung der Bremseinrichtung in der dargestellten Ruhelage nicht ausreichend ist oder die Bremseinrichtung bei Betätigung nicht wie gewünscht gelöst wird. Daher ist als Ausgleich dieser Toleranzen der Haltebolzen 20 für das feste Ende 18 der Schraubenfeder verschiebbar an der Endwand 3 angeordnet. Diese Verschiebbarkeit wird durch einen bogenförmigen Schlitz 21 in der Endwand 3 erreicht, wodurch die Position des Haltebolzens 20 exakt anpassbar ist.

Die Ausführungsarten nach den Figuren 3 und 4 unterscheiden sich durch die Art der manuellen Betätigung der Bremseinrichtung zum Heben der Abdeckung.

Bei der Ausführungsart nach Figur 3 wird zum Lösen der Bremseinrichtung der Durchmesser der Schraubenfeder 15 durch einen zweiarmigen Betätigungshebel 7 vergrössert, der auf der Achse 13 schwenkbar gelagert ist und mit seinem einen Hebelende 8 am freien Ende 19 der Schraubenfeder anliegt. Am anderen Ende des Betätigungshebels 7 ist ein Griff 9 angebracht. Wird der Betätigungshebel 7 im Gegenuhrzeigersinn geschwenkt, bewirkt der genannte Hebelarm 8 eine Vergrösserung des Durchmessers der Schraubenfeder, wodurch die Bremseinrichtung gelöst wird und die Abdeckung sich unter dem Einfluss der Federeinrichtung nach oben bewegt. Damit diese Schwenkbewegung durch das Profil 2 nicht behindert wird, ist in diesem ein Gehäuseschlitz 23 vorhanden, der übrigens auch in Figur 2 sichtbar und bezeichnet ist. Um ein Schwenken des Betätigungshebels 7 aus seiner Ruheposition im Uhrzeigersinn zu verhindern, ist an der Endwand ein Anschlag 22 vorgesehen.

Bei der Ausführungsart nach Figur 4 ist anstelle des Betätigungshebels 7 eine Betätigungskordel 10 vorhanden. Wird an dieser manuell nach unten gezogen, zieht ein Endstück 11 das freie Ende 19 der Schraubenfeder nach unten und die Bremseinrichtung wird gelöst. Zur Führung der Betätigungskordel 10 kann an der Endwand 3 eine Führung 12 angeordnet sein.

Dadurch, dass die Schraubenfeder 17 beim manuellen Lösen der Bremseinrichtung mittels des Betätigungshebels 7 oder der Betätigungskordel 10 jederzeit eine gewisse Reibung auf den Zylinder 15 ausübt, wird verhindert, dass sich die Abdeckung 4 zu schnell unter dem Einfluss der in der Walze angeordneten Federeinrichtung hebt.

### Bezugszeichenliste

- 1: Rollo
- 2: Profil
- 3: Endwand
- 4: Abdeckung
- 5: Schiene
- 6: Gelenkhebel
- 7: Betätigungshebel
- 8: Hebelende
- 9: Griff
- 10: Betätigungskordel
- 11: Endstück
- 12: Führung
- 13: Achse
- 14: Trommel
- 15: Zylinder
- 16: Mitnahmestift
- 17: Schraubenfeder
- 18: festes Ende
- 19: bewegliches Ende
- 20: Haltebolzen
- 21: bogenförmiger Schlitz
- 22: Anschlag
- 23: Gehäuseschlitz
- 24: Kanal

## Patentansprüche

1. Rollo (1) zur Abdeckung einer Öffnung, mit einer auf einer drehbaren Walze (14) aufgewickelten flexible Abdeckung (4) und einer Bremseinrichtung enthaltend einen Zylinder (15), eine den Zylinder (15) mehrfach umschlingende Schraubenfeder (17) mit einem radial abstehenden festen Ende (18) und einem radial abstehenden beweglichen Ende (19) und ein direkt und ausschliesslich auf das bewegliche Ende (19) der Schraubenfeder (17) einwirkendes Betätigungselement (7; 10), **dadurch gekennzeichnet, dass** die Walze (14) und die Bremseinrichtung in einem Gehäuse (2) zwischen zwei Endwänden (3) angeordnet sind, dass der Zylinder (15) und die Walze (14) auf einer gemeinsamen feststehenden, in den Endwänden (3) aufgenommenen Achse (13) drehbar angeordnet sind, wobei der Zylinder (15) durch mindestens ein Mitnahmeelement (16) mit der Walze (14) drehverbunden ist und dass das feste Ende (18) der Schraubenfeder (17) mit einem Haltebolzen (20) verbunden ist, der an einer der Endwände (3) befestigt ist.

2. Rollo (1) nach Anspruch 1, **dadurch gekennzeichnet, dass** die Position der Haltebolzens (20) an der Endwand (3) verschiebbar ist.

3. Rollo nach Anspruch 2, **dadurch gekennzeichnet, dass** der Haltebolzen (29 in einem Langloch (21) an der Entwand (3) fixiert ist.

4. Rollo nach Anspruch 3, **dadurch gekennzeichnet, dass** das Langloch (21) bogenförmig ausgebildet ist.

5. Rollo nach einem der vorangehenden Ansprüche, **dadurch gekennzeichnet, dass** das Mitnahmeelement ein parallel zur Achse (13) orientierten Mitnahmestift (16) ist.

6. Rollo nach einem der vorangehenden Ansprüche, **dadurch gekennzeichnet, dass** das das Betätigungselement ein schwenkbarer Hebel (7) ist.

7. Rollo nach einem der Ansprüche 1 bis 5, **dadurch gekennzeichnet, dass** das das Betätigungselement ein flexibles Zugmittel, beispielsweise eine Kordel (10) ist.
